# EUROPEAN PATENT SPECIFICATION

(11) **EP 3 000 271 B1**
(45) Date of publication and mention of the grant of the patent: **15.11.2017**
(21) Application number: 13724827.4
(22) Date of filing: 23.05.2013
(51) Int. Cl.: H04W 28/16, H04W 72/12

(54) **SIGNALLING SCHEME**
SIGNALISIERUNGSSCHEMA
MÉCANISME DE SIGNALISATION

(43) Date of publication of application: 30.03.2016
(73) Proprietor: Nokia Solutions and Networks Oy, 02610 Espoo (FI)
(72) Inventor: KOLDING, Troels Emil, DK-9270 Klarup (DK); KROENER, Hans, 73312 Geislingen-Weiler (DE); PEDERSEN, Klaus Ingemann, DK-9000 Aalborg (DK)
(74) Representative: Borgström, Markus
(86) International application number: PCT/EP2013/060597
(87) International publication number: WO 2014/187489

(56) References cited:
- EP-A2- 1 322 132
- US-A1- 2009 268 684

## Description

### Field

The exemplary and non-limiting embodiments of the invention relate generally to wireless communication systems. Embodiments of the invention relate especially to an apparatus, a method and a computer program product as defined in the independent claims.

### Background

The following description of background art may include insights, discoveries, understandings or disclosures, or associations together with disclosures not known to the relevant art prior to the present invention but provided by the invention. Some of such contributions of the invention may be specifically pointed out below, whereas other such contributions of the invention will be apparent from their context.

In communication system, cellular systems in particular, the coordinating and distributing of load between transceivers serving different cells may be a difficult problem. Different methods such as intra cell scheduling arrangements, load balancing techniques and coordinated scheduling of resources have been proposed but a fully successful solution has so far not been found.

US 2009/268684 A1 discloses a method comprising acts of soliciting/obtaining a current resource allocation for cells controlled by a first base station, ascertaining whether or not the current resource allocation satisfies quality of service targets associated with data flows traversing through at least one of the cells controlled by the first base station, and disseminating/dispatching an inter cell interference coordination (ICIC) indicator to a second base station. In US 2009/268684 A1, a bit field is added to the ICIC indicator, the bit field defines the highest-priority Radio Bearer or flow that is currently congested in a cell, wherein a state of congestion can typically occur when one of the quality of service (QoS) targets (e.g., delay, guaranteed bit rate,...) for the given Radio Bearer or data flow is consistently not being met. The number of bits added to the ICIC indicator can be similar to that needed for exactly one priority level. For instance, the number of bits added to the ICIC indicator can be the number of bits that are necessary to code at least one 3GPP Rel. 8 quality of service priority (QoS) number. Further there can be one reserved bit that can indicate that no Radio Bearer of flow is currently in congestion. Typically, the ICIC indicator can be triggered anytime there is a change in the highest priority level of a congested Radio Bearer or flow, or when the per-physical resource block (PRB) bit pattern is adjusted, in addition to other triggers that can be defined that are not based directly on quality of service (QoS) considerations. In one example, the current and prospective quality of service (QoS) targets/requirements, resource allocations, and/or highest identified priority data flow under congestion can be dispatched to neighboring base stations (e.g., via an X2 channel) as a bit or series of bits in an inter cell interference coordination indicator.

The object of EP 1 322 132 A2 is to provide a resource control system and a resource control method enabling the improvement of Qos and effective use of resources with regard to an entire packet mobile communication system, by performing resource control of an own cell in cooperation with resource control of peripheral cells. The base station of a specific cell temporarily suppresses the use of resources for non-real time packets, packets of low priority, or real time packets having a margin for Qos by the base stations of a peripheral cells, which are prone to affect the base station of the specific cell with interference. In EP 1 322 132 A2, a first base station requests a second base station to suppress the use of resources when the Qos of the packet is judged not to be ensured or when the resources necessary for packet are judged not to be secured. The second base station includes a resource use suppression unit for suppressing the use of resources for the packet communication between the mobile station and the second base station in accordance with the request from the first base station.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus, comprising: at least one processor; and at least one memory including computer program code, the at least one memory and the computer program code configured to, with the at least one processor, cause the apparatus at least to: determine the amount of resources a base station serving a first cell requires to fulfil predetermined quality quality criteria of existing connections; control the transmission of the determined information to a base station serving a second cell.

According to an aspect of the present invention, there is provided a method determining the amount of resources a base station serving a first cell requires to fulfil predetermined quality criteria of existing connections; transmitting the determined information to a base station serving a second cell.

### List of drawings

Embodiments of the present invention are described below, by way of example only, with reference to the accompanying drawings, in which
Figure 1 illustrates an example of a communication environment;
Figure 2 is a flowchart illustrating an example of an embodiment of the invention;
Figure 3 is an example of illustrating an embodiment;
Figure 4 is an example of a signalling chart illustrating an embodiment;
Figures 5A, 5B and 5C are examples different embodiments and
Figure 6 illustrates an example of an apparatus.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

Embodiments are applicable to any base station, user equipment (UE), server, corresponding component, and/or to any communication system or any combination of different communication systems that support required functionalities.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the universal mobile telecommunications system (UMTS) radio access network (UTRAN or E-UTRAN), long term evolution (LTE®, known also as E-UTRA), long term evolution advanced (LTE-A®), Wireless Local Area Network (WLAN) based on IEEE 802.11 stardard, worldwide interoperability for microwave access (WiMAX), Bluetooth®, personal communications services (PCS) and systems using ultra-wideband (UWB) technology. IEEE refers to the Institute of Electrical and Electronics Engineers. LTE and LTE-A are developed by the Third Generation Partnership Project 3GPP.

In the following, different exemplifying embodiments will be described using, as an example of an access architecture to which the embodiments may be applied, a radio access architecture based on long term evolution advanced (LTE Advanced, LTE-A), that is based on orthogonal frequency multiplexed access (OFDMA) in a downlink and a single-carrier frequency-division multiple access (SC-FDMA) in an uplink, without restricting the embodiments to such an architecture, however. It is obvious for a person skilled in the art that the embodiments may also be applied to other kinds of communications networks having suitable means by adjusting parameters and procedures appropriately.

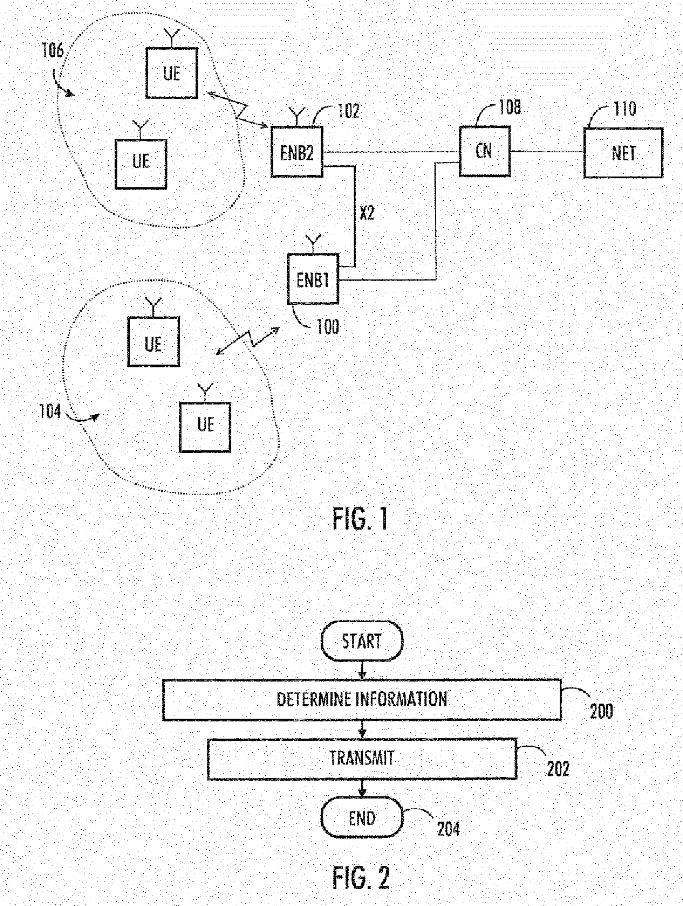

Figure 1 illustrates a simplified view of a communication environment only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

In the example of Figure 1, a radio system based on long term evolution advanced (LTE Advanced, LTE-A) network elements is shown. However, the embodiments described in these examples are not limited to the LTE-A radio systems but can also be implemented in other radio systems.

Figure 1 shows eNodeBs 100 and 102 connected to core network CN 108 of a communication system. The eNodeBs are connected to each other over an X2 interface.

The eNodeBs 100, 102 that may also be called base stations of the radio system may host the functions for Radio Resource Management: Radio Bearer Control, Radio Admission Control, Connection Mobility Control, Dynamic Resource Allocation (scheduling). Depending on the system, the counterpart on the CN side can be a serving gateway (S-GW, routing and forwarding user data packets), packet data network gateway (P-GW, for providing connectivity of user devices (UEs) to external packet data networks), and/or mobile management entity (MME), etc. The MME (not shown) is responsible for the overall user terminal control in mobility, session/call and state management with assistance of the eNodeBs through which the user terminals connect to the network.

The communication system is also able to communicate with other networks, such as a public switched telephone network or the Internet 110. The communication network may also be able to support the usage of cloud services. It should be appreciated that eNodeBs or their functionalities may be implemented by using any node, host, server or access point etc. entity suitable for such a usage.

The user equipment UE (also called user device, user terminal, terminal device, etc.) illustrate one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user equipment typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device.

The user equipment (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Further, although the apparatuses have been depicted as single entities, different units, processors and/or memory units (not all shown in Figure 1) may be implemented.

In the example of Figure 1, the eNodeB 100 serves a first cell 104 comprising one or more UEs. Correspondingly, the eNodeB 102 serves a second cell 106 comprising one or more UEs. The UEs of a cell are connected to the eNodeB serving the cell using spectrum allocated to the communication system.

It is obvious for a person skilled in the art that the depicted system is only an example of a part of a radio access system and in practise, the system may comprise a plurality of eNodeBs, the user device may have an access to a plurality of radio cells and the system may comprise also other apparatuses, such as physical layer relay nodes or other network elements, etc. At least one of the NodeBs or eNodeBs may be a Home eNodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometres, or smaller cells such as micro-, femto- or picocells. The eNodeBs of Figure 1 may provide any kind of these cells. A cellular radio system may be implemented as a multilayer network including several kinds of cells. Typically, in multilayer networks, one node provides one kind of a cell or cells, and thus a plurality of eNodeBs are required to provide such a network structure.

Recently for fulfilling the need for improving the deployment and performance of communication systems, the concept of "plug-and-play" eNodeBs has been introduced. Typically, a network which is able to use "plug-and-play" eNode Bs, includes, in addition to Home eNodeBs (HeNBs) or Home NodeBs (HNBs), a HeNB Gateway (HeNB GW), or HNB Gateway (HNB-GW) (not shown in Figure 1). A HeNB GW or HNB-GW, which is typically installed within an operator's network, may aggregate traffic from a large number of HNBs back to a core network.

Some embodiments of the invention are associated with coordinated scheduling, centralized scheduling, and centralized radio resource management of eNodeBs of a communication system such as LTE-A. In particular, explicit Quality of Service (QoS) aware coordination of resources among cells is of interest.

Concept of coordination related to general spectral efficiency enhancements and cell edge boosting has a lot of problems to achieve gains in highly loaded networks because the coordination itself takes away scheduler freedom from individual cells which often can be used more effectively in order to achieve good performance and throughput.

In some embodiments, smart coordination is done in the following prioritized order to ensure that most users of the system can get their QoS satisfied and that the system has maximized network capacity in terms of maximum number of satisfied users that can be supported simultaneously in the network.

First, intra-cell scheduler enhancements are used to boost specific users, cell edge gains, and cell capacity by means of fast packet scheduling as well as QoS balancing, for example by scheduling strictly according to e.g. Gross Bit Rate GBR targets.

Second, load balancing techniques (such as the adjustment of cell individual offset at macro layer, and enhanced inter-cell interference coordination (eICIC) techniques at Heterogeneous Networks (HetNet) layer) are effective in terms of balancing the number of users per cell.

Finally, explicit coordinated scheduling (or muting) can be used where cell resources of a cell are used to boost performance of another cell. For example the resources may be muted or they may be applied in Coordinated Multi-Point (CoMP) fashion. This approach may have a high opportunity cost as muting resources has limited effect to another cells (as interference limited scenario has many interfering sources) and the resources could have been used more effectively to boost an own user.

The above three-step procedure is merely an example of a possible implementation. Embodiments of the invention are not limited to such a solution. For example, explicit coordinated scheduling may be applied alone or as a first step.

In an embodiment, a formalized exchange of status information between eNodeBs is proposed to allow for fast assessment of whether overall network utility increases by means of scheduler coordination; e.g. quick assessment of value of coordinated scheduling versus opportunity cost. Specifically, a signalling mechanism is proposed to allow for such fast coordination of physical resources based on QoS fulfilment equalization and the corresponding decision logic.

Figure 2 is a flowchart illustrating an embodiment of the invention. The example of Figure 2 illustrates the operation of eNodeB 100.

In step 200, the eNodeB determines the amount of resources it requires to fulfil predetermined quality criteria of existing connections in the cell it is serving.

In an embodiment, the resources are determined separately for uplink and downlink transmission directions. The eNodeB may be configured to determine the minimum amount of Physical Resource Blocks PRB required to fulfil quality of service requirements of existing connections utilising different bearer types.

In step 202, the eNodeB controls the transmission of the determined information to an eNodeB serving another cell. For example, the eNodeB 100 may transmit the information to eNodeB 102. Further, the eNodeB 102 may send corresponding information to eNodeB 100.

The process ends in step 204.

In an embodiment, a decision logic is proposed to help eNodeBs decide very fast whether coordination of resources lead to an overall utility increase for the network. In an embodiment, an eNodeB may give out resources for coordination to other cells as long as (1) its own minimum QoS requirements are fulfilled and (2) the cell receiving the QoS boost has a reported minimum PRB utilization of more than 100% (e.g. it cannot fulfil its minimum QoS requirements currently). This way, the system converges to the case where cell resources are used optimally (intra-cell users before other-cell users) but enables the freedom to apply other-cell muting when system utilization is increased (e.g. capacity in number of satisfied users supported simultaneously is maximized).

Let us study an example of the implementation of the signalling between the eNodeBs. Let us consider a cell which is contained within a logical eNodeB in LTE terminology. In addition, let us consider coordination of the packet scheduling of this cell with another cell which is hosted within a different logical eNodeB. However, the proposed scheme also works for cells hosted on the same eNode.

The eNodeBs are assumed to be connected to each other via an X2 connection to its relevant neighbours. In some embodiments, a proprietary interface may be utilised as well. Note that an eNodeB can be both a small cell and a normal macro cell.

In an embodiment, an extension to the X2 protocol defined in 3GPP is proposed. Also a new interface may be defined for the purpose. The extension can also be done proprietarily.

In an embodiment, an extension of an existing table defining possible status messages between eNodeBs is proposed. The timing of proposed messages may be freely selected to be either periodic or on request basis. An example of new Information Elements proposed to be added to existing Radio Resource Status procedure defined in X2 specifications are illustrated in the following table:

**Table 1**

| **IE/Group Name** | **Presence** | **IE type and reference** |
|---|---|---|
| Minimum DL GBR PRB usage | M | INTEGER (0..100) |
| Minimum UL GBR PRB usage | M | INTEGER (0..100) |
| Minimum DL non-GBR PRB usage | M | INTEGER (0..100) |
| Minimum UL non-GBR PRB usage | M | INTEGER (0..100) |
| Minimum DL Total PRB usage | M | INTEGER (0..100) |
| Minimum UL Total PRB usage | M | INTEGER (0..100) |

In present solutions, eNodeBs are configured to report to neighbouring eNodeBs the total Physcial Resource Block usage comprising the amount of PRBs reserved to and used by the existing connections. It may be noted from above that in addition to the normal reporting of resources that have been consumed in the past, the eNodeB is now also configured to inform its neighbours about which resources it needs as a minimum to exactly fulfil specified quality criteria for the different types of traffic. How the different new measurements are defined is discussed below.

In LTE there are bearers denoted as Guaranteed Bit Rate (GBR) bearers and non-GBR bearers. The GBR bearers are typically used for real-time services requiring a constant minimum bandwidth which is reserved for the service by the network. The non-GBR bearers are used for services which are not time critical such as browsing and email connections.

Minimum GBR PRB Usage is the eNodeBs estimate of how many PRBs it needs (based on knowledge of current set of GBR users and their data patterns and channel quality) to exactly fulfil the GBR requirement for these users. If the eNodeB would allocate less than minimum PRBs to GRB bearers, it would estimate that one or more GBR users would fail to get their QoS fulfilled. This metric may be estimated separately for both downlink and uplink taking into account the data flows in both directions as well as the channel quality.

Embodiments of the present invention are not dependent on any particular method of how minimum GBR PRB usage is determined. Various solutions may be applied. For example, the eNodeB may be exposed to various QCI profile users. The eNodeB may then report the minimum required PRB usage for the set of users and when limited to this PRB usage, the eNodeB should still fulfill QoS targets for the users but not exceed it by more than Y%, where Y is a predetermined constant. Y may for instance bebased on users scheduling history..

Minimum non-GBR PRB usage: For non-GBR users there is no default target that can be used to predict minimum PRB utilization. There are various methods to estimate minimum required PRB usage based on the operators preferred handling of this type of traffic. As examples, a nominal bit rate can be specified also for non-GBR users in which case the PRB utilization is calculated based on this value. Other schemes can also be envisioned, e.g. that operators require that a non-GBR user always gets at least a certain percentage of PRBs. Alternatively, the value can be set to zero given that we would accept non-GBR users to be completely sacrificed in order to deliver QoS to GBR users. With this metric, many different operator strategies can be supported for non-GBR traffic handling across the network. Similar as to the GBR case, the metrics may be calculated separately for the downlink and the uplink direction.

Minimum Total PRB usage: Besides from the user data traffic, the system needs to reserve capacity for critical system messages like Signaling Radio Bearer (SRB), scheduled Channel Quality Indication (CQI) reports, etc. Rather than specifying directly the expected PRB usage for this traffic an implementation may be used which follows the normal 3GPP nomenclature. Thus, the total traffic is the sum of minimum non-GBR PRB usage, minimum GBR PRB usage, and the minimum PRB usage needed for these system messages. Alternatively, it could just be specified how many critical messages are needed. The estimation may be conducted separately for downlink and uplink considering the different requirements in both domains.

It should be noted here that the above example of the inventive concept is simplified to the GBR and the non-GBR bearers as this is current default in 3GPP X2 protocol specification. As known, in LTE there are currently nine QCI classes, four of which are GBR and five are non-GBR. The embodiments of the inventive solution may be extended easily to consider more QoS classes, e.g. per Quality Class Indicator (QCI) for further ability to prioritize different traffic types across cells; e.g. extend the full single-cell QoS framework to a multi-cell one.

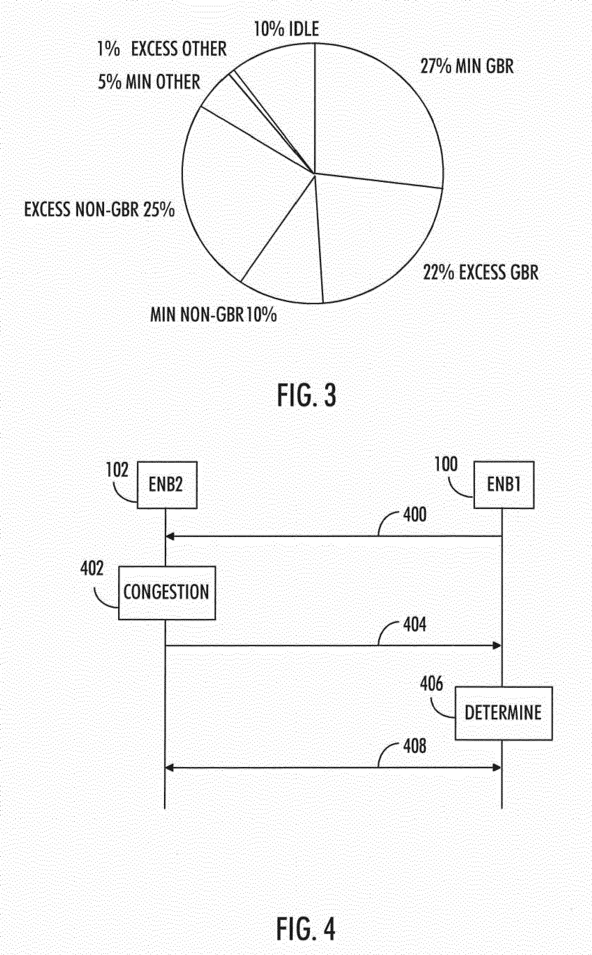

Let us study an example of an embodiment referring to Figure 3. Figure 3 shows an example of PRB utilization (in percent) for an eNodeB running different traffic types. In the example situation of Figure 3, the minimum GBR amount is 27%, the excess GBR amount is 22%, minimum non-GBR amount is 10%, excess non-GBR amount is 25%. Minimum for other traffic is 5%, excess for other traffic 1% and 10% is idle. To relate to what is reported in 3GPP according to prior art, the total utilization recorded would be everything here excluding "Idle" part. Thus, the total PRB usage would be recorded to 90%. For e.g. GBR part, the usage is the sum of minimum GBR and excess GBR. The excess part relates to PRBs that were used on top of the minimum requirement, e.g. leading to GBR users getting additional QoS/bit rates compared to the configured GBR value.

The example illustrates some advantages of the embodiments of the invention. The minimum required GBR resources are expressed explicitly and the eNodeB is configured to make a best prediction as to what it needs of PRB resources for the following reporting interval (e.g. prediction ability). In this example case, when considering resource balancing with other cells, the excess and idle parts may be sacrificed if it helps another cell. In the example, the cell only strictly needs 52% of PRB resources but the standard 3GPP mechanism would report that 90% of PRB resources are in use and thus needed.

As mentioned earlier, the signalling and metric solution can be combined with many different coordination solutions. Let us consider a following non-limiting example scenario. Figure 4 illustrates an example of information exchange and actions between two eNodeBs 100, 102 to coordinate resource for maximizing the joint multicell utility.

In phase 402, eNodeB 102 determines congestion occurs, i.e. that it no longer can fulfil the minimum QoS for all of its users. Let us assume an eNodeB 102 which has already done what it can in terms of intra-cell scheduling prioritization and load balancing potential with neighbour cells. The eNodeB 102 cannot fulfil GBR for its GBR users, and it has already pushed down its lower-priority (e.g. non-GBR) traffic to its limit. It realizes that eNodeB 100 (from established neighbour relations seen from its UE base) can help if it is willing to mute its resources by sacrificing its internal capacity or end-user experience, for example. It may be noted that intra-cell scheduling prioritization and load balancing are mentioned above as an example only and are not required in all embodiments.

From prior art based measurements transmitted using X2 interface eNodeB 102 knows that eNodeB 100 has 100% utilization of its PRBs. However, with the proposed new measurements more detailed knowledge about eNodeB load is obtained and eNodeB 100 has reported 400 the following numbers to eNodeB 102:
Minimum GBR capacity (10%)
Excess GBR capacity (20%)
Minimum Non-GBR capacity (10%)
Excess Non-GBR capacity (50%)
Other traffic/messages (10%)
Idle PRBs (0%)

On the basis of message 400 eNodeB 102 is aware that eNodeB 100 only strictly needs 50% of its resources and can still keep its end-users satisfied with this resourcing. Thus, in principle eNodeB 100 may release 50% of resources without causing service outage according to the operator defined thresholds, GBR etc.. Opposite, eNodeB 102 will report 404 to eNodeB 100 a situation that it has 100% PRB utilization as eNodeB 102 has already done what it can to optimize intra-cell resources. Thus, as illustrated in Figure 4, eNodeB 102 will report to eNodeB 100, the following Radio Resource Status:
Minimum GBR capacity 110%
Excess GBR capacity 0%
Minimum non-GBR capacity 10%
Excess non-GBR capacity 0%
Other/traffic messages 10%
Idle PRBs 0%

Thus, eNodeB 102 reports that it is running at 130% load, i.e. it is 30% overloaded. So eNodeB 102 estimates that it needs 130% PRB resources to exactly fulfil minimum requirements in the cell.

Note from the example that non-GBR still gets some minimum capacity even if GBR QoS is not fulfilled. This trade-off is part of normal QoS mechanisms and can be adjusted by the operator. Here we assume that non-GBR users cannot be fully starved but 10% of system resources need to be reserved for those.

Hence, if and when eNodeB 102 asks eNodeB 100 for resources (up to 50%), eNodeB 100 will always accept to help. There may be a rule that eNodeB 102 will never ask for more resources than is strictly needed to bring its required PRB utilization back to 100%. Thus, eNodeB 100 will stop granting more resources to eNodeB 102 when required PRB utilization (total) for eNodeB 102 is 100%.

In phase 406, eNodeB 100 knows that eNodeB 102 has load problems. At the same time, it determines that is has excess capacity available. ENodeB 100 is configured to determine that the overall capacity of the network increases if it releases resources for coordination to a eNodeB 102 as the determined amount of resources required to fulfil predetermined quality criteria of existing connections in eNodeB 100 is less that available resources and as eNodeB 102 cannot fulfil the predetermined quality criteria of its existing connections.

Thus, at phase 408 eNodeBs 100 and 102 continue exchanging Radio Resource Status messages over X2 interface and adjust their resource usage to maximize the combined capacity.

Embodiments of the present invention are not concerned with the actual negotiation or coordination scheme of which system resources to mute or release. The coordination scheme may determine which resources are muted and ensure that the muting is communicated to maximize the benefit for the whole network. Embodiments of the present invention define a metric as to when muting is useful to increase overall network utility (defined as number of active users that can be supported simultaneously in the network).

After the muting has been agreed, both eNodeBs will report their new situation. Let us assume that eNodeB 102 can exactly meet QoS requirements when eNodeB 100 mutes 50% of its PRB resources (or helps the other eNodeB via CoMP (or equivalent) on those very same resources). However, due to the muting eNodeB 100 has also lost some of its internal spectral efficiency (frequency domain packet scheduling may be now less effective; throughput of cell may not scale linearly with how many PRBs are available and estimation of these effects for eNodeB 100 in determining minimum utilization may not be 100% accurate) so it may now report back after muting that it's new estimates for minimum required PRB utilization increases by 10%. This tells eNodeB 102 for the next negotiation interval that it can only ask for 40% or resources and may have to accept a loss in its own cell for its own users unless it can get help from another cell.

Thus, in an embodiment eNodeBs give out resources for coordination as long as its minimum QoS requirements are fulfilled (minimum PRB utilization figures) and the eNodeB receiving the QoS boost has a reported minimum PRB utilization of more than 100%. This way, the system converges to the case where eNodeB resources are used optimally (intra-cell users before other-cell users) but enables the freedom to apply other-cell muting when system utilization is increased (e.g. capacity in number of satisfied users supported simultaneously is maximized).

A drawback of muting resources is that traffic may "pile up" in the cells for those services that are non-elastic. Thus, they just stay buffered until delivered. This shows a clear strength of the proposed solution. If an eNodeB is muting for a while, the number of users active in this eNodeB may increase over time (as traffic of old users has been postponed). However, with the proposed scheme, the eNodeB will now report that it needs more PRBs to fulfil its own users' critical traffic now and thus muting automatically adapts to the situation. Thus, eNodeBs always focus on their own critical traffic first (with highest spectral efficiency).

The example illustrated in Figure 4 is applicable for any peer to peer eNodeB coordination, including co-channel Heterogeneous Networks (HetNet) scenarios with high power macro-cells and low power small cells. For especially the HetNet case, a macro-cell is often considered as the aggressor (the cell causing interference) while the small cells are the victims (the cells suffering from interference). It is therefore recommended to have the macro-cell collect the Radio Resource Status information (including the new Information Elements proposed above) from all its underlying small cells. Based on this information, the macro-cell may decide if it should perform more or less muting, for example using Almost blank subframes (ABS) as for the well-known enhanced inter-cell interference coordination (eICIC) concept, to jointly optimize the combined capacity for the users in the macro-cell and the underlying small cells.

Above LTE architecture has been used as an example. However, embodiments of the invention may also be utilised in other environments such as where architecture evaluates towards a centralized element

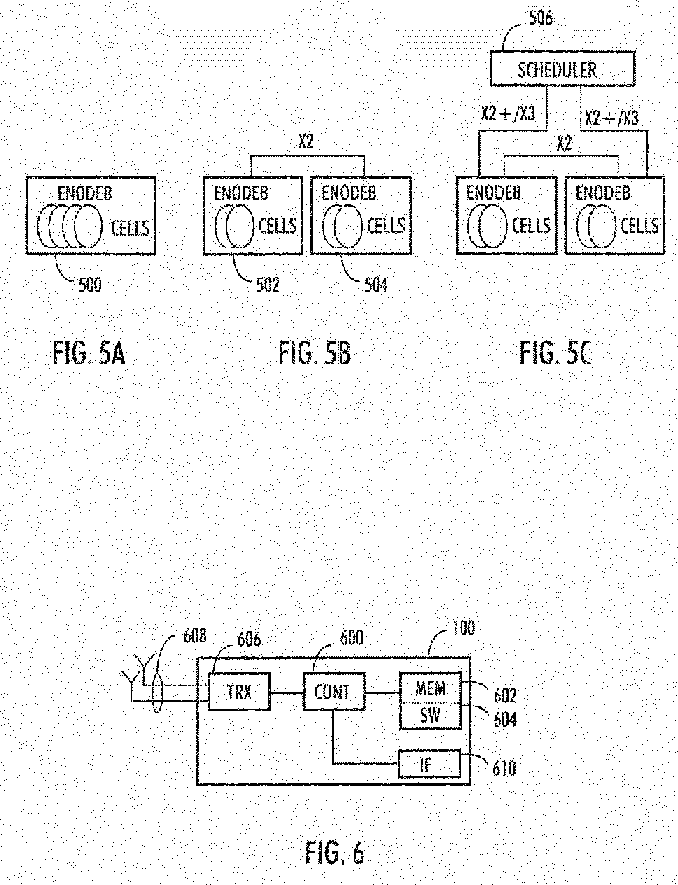

Figures 5A, 5B and 5C illustrate examples. As shown in Figure 5A, the proposed signalling scheme can be used within an eNodeB 500 to enhance coordination of scheduling in a proprietary way. An example is a Cloud Radio Access Network (RAN) where the eNodeB hosts possibly hundreds of cells.

Figure 5B illustrates a traditional X2 based architecture with two eNodeBs 502, 504 where the signalling may be added to existing X2 protocol or implemented as a proprietary solution where vendors include the signalling schemes on top of the standardized X2 protocol.

Figure 5C illustrates an example of a distributed RAN with architectural enhancement in the form of e.g. a centralized scheduler element 506. In this example, the signals for PRB utilization may be transmitted to the central node 506 instead of neighbouring eNodeB. The eNodeBs may be connected with the X2 interface and connections to scheduler 506 may be realized with an enhanced X2+ or a new X3 interface, for example. These implementations are merely examples, however.

Figure 6 illustrates an embodiment. The figure illustrates a simplified example of an apparatus in which embodiments of the invention may be applied. In some embodiments, the device may be a base station or eNodeB or a part of an eNodeB communicating with a set of UEs.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 600 configured to control at least part of the operation of the apparatus.

The apparatus may comprise a memory 602 for storing data. Furthermore the memory may store software 604 executable by the control circuitry 600. The memory may be integrated in the control circuitry.

The apparatus comprises a transceiver 606. The transceiver is operationally connected to the control circuitry 600. It may be connected to an antenna arrangement 608 comprising one more antenna elements or antennas.

The software 604 may comprise a computer program comprising program code means adapted to cause the control circuitry 600 of the apparatus to control a transceiver 606.

The apparatus may further comprise an interface 610 operationally connected to the control circuitry 600. The interface may connect the apparatus to other respective apparatuses such as eNodeB via X2 interface or to the core network.

The control circuitry 600 is configured to execute one or more applications. The applications may be stored in the memory 602. The applications may cause the apparatus to determine the amount of resources a base station serving a first cell requires to fulfil predetermined quality criteria of existing connections and control the transmission of the determined information to a base station serving a second cell, for example.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

The apparatus may also be implemented as an apparatus comprising means for determining the amount of resources a base station serving a first cell requires to fulfil predetermined quality criteria of existing connections and means for transmitting the determined information to a base station serving a second cell.

It will be obvious to a person skilled in the art that, as technology advances, the inventive concept can be implemented in various ways. The invention and its embodiments are not limited to the examples described above but may vary within the scope of the claim.

## Claims

1. An apparatus, comprising:
at least one processor; and
at least one memory including computer program code,
the at least one memory and the computer program code configured to, with the at least one processor, cause the apparatus at least to:
determine (200) the amount of resources a base station (100) serving a first cell (104) requires to fulfil predetermined quality criteria of existing connections, wherein the apparatus is configured to determine the minimum amount of Physical Resource Blocks required to fulfil quality of service requirements of existing connections utilising different bearer types; and
control (202) the transmission of a determined information to a base station (102) serving a second cell (106), wherein the determined information comprises the minimum amount of Physical Resource Blocks required to fulfil quality of service requirements of existing connections utilising different bearer types.

2. The apparatus of claim 1, further configured to determine the resources separately for uplink and downlink transmission directions.

3. The apparatus of any preceding claim, wherein the apparatus is configured to determine the total minimum amount of Physical Resource Blocks required to fulfil quality of service requirements of traffic connections and transmissions of system messages.

4. The apparatus of any preceding claim, wherein the apparatus is configured to transmit the determined information utilising an X2 interface connecting base stations (100, 102).

5. The apparatus of any preceding claim, wherein the apparatus is configured to determine amount of resources required by guaranteed bit rate bearers and non-guaranteed bit rate bearers.

6. The apparatus of any preceding claim, further configured to release resources for coordination to the base station (102) serving the second cell (106) if the determined amount of resources required to fulfil predetermined quality criteria of existing connections is less that available resources and the base station (102) serving the second cell (106) cannot fulfil the predetermined quality criteria of existing connections of the another cell.

7. The apparatus of claim 6, wherein the apparatus is configured to receive from the base station (102) serving the second cell (106) information related to the amount of resources the base station (102) serving the second cell (106) requires to fulfil predetermined quality criteria of existing connections of the second cell (106).

8. A method, comprising:
determining (200) the amount of resources a base station (100) serving a first cell (104) requires to fulfil predetermined quality criteria of existing connections, wherein the determining comprises determining the minimum amount of Physical Resource Blocks required to fulfil quality of service requirements of existing connections utilising different bearer types; and transmitting (202) a determined information to a base station (102) serving a second cell (106), wherein the determined information comprises the minimum amount of Physical Resource Blocks required to fulfil quality of service requirements of existing connections utilising different bearer types.

9. The method of claim 8, further comprising: determining the resources separately for uplink and downlink transmission directions.

10. The method of any preceding claim 8 to 9, further comprising: determining the total minimum amount of Physical Resource Blocks required to fulfil quality of service requirements of traffic connections and transmissions of system messages.

11. The method of any preceding claim 8 to 10, further comprising: transmitting the determined information utilising an X2 interface connecting base stations (100, 102).

12. The method of any preceding claim 8 to 11, further comprising: determining amount of resources required by guaranteed bit rate bearers and non-guaranteed bit rate bearers.

13. The method of any preceding claim 8 to 12, further comprising: releasing resources for coordination to the base station (102) serving the second cell (106) if the determined amount of resources required to fulfil predetermined quality criteria of existing connections is less that available resources and the base station (102) serving the second cell (106) cannot fulfil the predetermined quality criteria of existing connections of the second cell (106).

14. The method of claim 13, receiving from the base station (102) serving the second cell (106) information related to the amount of resources the base station serving (102) the second cell (106) requires to fulfil predetermined quality criteria of existing connections of the second cell (106).

15. A computer program product embodied on a distribution medium readable by a computer and comprising program instructions which, when loaded into an apparatus, execute the method according to any of claims 8 to 14.

## Patentansprüche

1. Vorrichtung, umfassend:
mindestens einen Prozessor und
mindestens einen Speicher, der Computerprogrammcode umfasst,
wobei der mindestens eine Speicher und der Computerprogrammcode so konfiguriert sind, dass sie mit dem mindestens einen Prozessor die Vorrichtung wenigstens veranlassen zum:
Bestimmen (200) der Menge von Ressourcen, die eine Basisstation (100), die eine erste Zelle (104) versorgt, zum Erfüllen vorbestimmter Qualitätskriterien bestehender Verbindungen benötigt, wobei die Vorrichtung so konfiguriert ist, dass sie die Mindestmenge physikalischer Ressourcenblöcke bestimmt, die zum Erfüllen von Dienstqualitätsanforderungen bestehender Verbindungen unter Verwendung verschiedener Trägertypen erforderlich sind; und
Steuern (202) der Übertragung einer bestimmten Information an eine Basisstation (102), die eine zweite Zelle (106) versorgt, wobei die bestimmte Information die Mindestmenge physikalischer Ressourcenblöcke umfasst, die zum Erfüllen von Dienstqualitätsanforderungen bestehender Verbindungen unter Verwendung verschiedener Trägertypen erforderlich sind.

2. Vorrichtung nach Anspruch 1, die ferner so konfiguriert ist, dass sie die Ressourcen für Uplink- und Downlink-Übertragungsrichtungen getrennt bestimmt.

3. Vorrichtung nach einem der vorhergehenden Ansprüche, wobei die Vorrichtung so konfiguriert ist, dass sie die Gesamtmindestmenge physikalischer Ressourcenblöcke bestimmt, die zum Erfüllen von Dienstqualitätsanforderungen von Verkehrsverbindungen und Übertragungen von Systemnachrichten erforderlich sind.

4. Vorrichtung nach einem der vorhergehenden Ansprüche, wobei die Vorrichtung so konfiguriert ist, dass sie die bestimmte Information unter Verwendung einer X2-Schnittstelle sendet, welche die Basisstationen (100, 102) verbindet.

5. Vorrichtung nach einem der vorhergehenden Ansprüche, wobei die Vorrichtung so konfiguriert ist, dass sie die Menge von Ressourcen bestimmt, die von Trägern mit zugesicherter Bitrate und Trägern mit nicht zugesicherter Bitrate benötigt werden.

6. Vorrichtung nach einem der vorhergehenden Ansprüche, die ferner so konfiguriert ist, dass sie Ressourcen zur Koordination an die Basisstation (102), welche die zweite Zelle (106) versorgt, freigibt, wenn die bestimmte Menge von Ressourcen, die zum Erfüllen vorbestimmter Qualitätskriterien bestehender Verbindungen erforderlich sind, geringer als verfügbare Ressourcen ist, und die Basisstation (102), welche die zweite Zelle (106) versorgt, die vorbestimmten Qualitätskriterien bestehender Verbindungen der anderen Zelle nicht erfüllen kann.

7. Vorrichtung nach Anspruch 6, wobei die Vorrichtung so konfiguriert ist, dass sie von der Basisstation (102), welche die zweite Zelle (106) versorgt, Information in Bezug auf die Menge von Ressourcen empfängt, welche die Basisstation (102), welche die zweite Zelle (106) versorgt, zum Erfüllen vorbestimmter Qualitätskriterien bestehender Verbindungen der zweiten Zelle (106) benötigt.

8. Verfahren, umfassend:
Bestimmen (200) der Menge von Ressourcen, die eine Basisstation (100), die eine erste Zelle (104) versorgt, zum Erfüllen vorbestimmter Qualitätskriterien bestehender Verbindungen benötigt, wobei das Bestimmen ein Bestimmen der Mindestmenge physikalischer Ressourcenblöcke umfasst, die zum Erfüllen von Dienstqualitätsanforderungen bestehender Verbindungen unter Verwendung verschiedener Trägertypen erforderlich sind; und
Senden (202) einer bestimmten Information an eine Basisstation (102), die eine zweite Zelle (106) versorgt, wobei die bestimmte Information die Mindestmenge physikalischer Ressourcenblöcke umfasst, die zum Erfüllen von Dienstqualitätsanforderungen bestehender Verbindungen unter Verwendung verschiedener Trägertypen erforderlich sind.

9. Verfahren nach Anspruch 8, ferner umfassend: getrenntes Bestimmen der Ressourcen für Uplink- und Downlink-Übertragungsrichtungen.

10. Verfahren nach einem der Ansprüche 8 bis 9, ferner umfassend: Bestimmen der Gesamtmindestmenge physikalischer Ressourcenblöcke, die zum Erfüllen von Dienstqualitätsanforderungen von Verkehrsverbindungen und Übertragungen von Systemnachrichten erforderlich sind.

11. Verfahren nach einem der Ansprüche 8 bis 10, ferner umfassend: Senden der bestimmten Information unter Verwendung einer X2-Schnittstelle, welche die Basisstationen (100, 102) verbindet.

12. Verfahren nach einem der Ansprüche 8 bis 11, ferner umfassend: Bestimmen der Menge von Ressourcen, die von Trägern mit zugesicherter Bitrate und Trägern mit nicht zugesicherter Bitrate benötigt werden.

13. Verfahren nach einem der Ansprüche 8 bis 12, ferner umfassend: Freigeben von Ressourcen zur Koordination an die Basisstation (102), welche die zweite Zelle (106) versorgt, wenn die bestimmte Menge von Ressourcen, die zum Erfüllen vorbestimmter Qualitätskriterien bestehender Verbindungen erforderlich sind, geringer als verfügbare Ressourcen ist, und die Basisstation (102), welche die zweite Zelle (106) versorgt, die vorbestimmten Qualitätskriterien bestehender Verbindungen der zweiten Zelle (106) nicht erfüllen kann.

14. Verfahren nach Anspruch 13, Empfangen von der Basisstation (102), welche die zweite Zelle (106) versorgt, von Information in Bezug auf die Menge von Ressourcen, welche die Basisstation (102), welche die zweite Zelle (106) versorgt, zum Erfüllen vorbestimmter Qualitätskriterien bestehender Verbindungen der zweiten Zelle (106) benötigt.

15. Computerprogrammprodukt, das auf einem Verbreitungsmedium enthalten ist, das von einem Computer gelesen werden kann und Programmanweisungen umfasst, die, wenn in eine Vorrichtung geladen, das Verfahren nach einem der Ansprüche 8 bis 14 ausführen.

## Revendications

1. Un appareil, comprenant :
au moins un processeur, et
au moins une mémoire contenant du code de programme informatique,
la au moins une mémoire et le code de programme informatique étant configurés de façon à, avec le au moins un processeur, amener l'appareil au moins à :
déterminer (200) la quantité de ressources dont une station de base (100) desservant une première cellule (104) a besoin pour satisfaire des critères de qualité prédéterminés de connexions existantes, l'appareil étant configuré de façon à déterminer la quantité minimale de blocs de ressource physiques nécessaire pour satisfaire des exigences de qualité de service de connexions existantes au moyen de différents types de porteuse, et
commander (202) la transmission d'une information déterminée vers une station de base (102) desservant une deuxième cellule (106), l'information déterminée comprenant la quantité minimale de blocs de ressource physiques nécessaire pour satisfaire des exigences de qualité de service de connexions existantes au moyen de différents types de porteuse.

2. L'appareil selon la revendication 1, configuré en outre de façon à déterminer séparément les ressources pour des directions de transmission en liaison montante et en liaison descendante.

3. L'appareil selon l'une quelconque des revendications précédentes, dans lequel l'appareil est configuré de façon à déterminer la quantité totale minimale de blocs de ressource physiques nécessaire pour satisfaire des exigences de qualité de service de connexions de trafic et de transmissions de messages système.

4. L'appareil selon l'une quelconque des revendications précédentes, dans lequel l'appareil est configuré de façon à transmettre l'information déterminée au moyen d'une interface X2 qui relie des stations de base (100, 102).

5. L'appareil selon l'une quelconque des revendications précédentes, dans lequel l'appareil est configuré de façon à déterminer la quantité de ressources requise par des porteuses à débit binaire garanti et des porteuses à débit binaire non garanti.

6. L'appareil selon l'une quelconque des revendications précédentes, configuré en outre de façon à libérer des ressources de coordination vers la station de base (102) desservant la deuxième cellule (106) si la quantité déterminée de ressources nécessaire pour satisfaire des critères de qualité prédéterminés de connexions existantes est inférieure à des ressources disponibles et la station de base (102) desservant la deuxième cellule (106) ne peut pas satisfaire les critères de qualité prédéterminés de connexions existantes de l'autre cellule.

7. L'appareil selon la revendication 6, dans lequel l'appareil est configuré de façon à recevoir à partir de la station de base (102) desservant la deuxième cellule (106) des informations relatives à la quantité de ressources dont la station de base (102) desservant la deuxième cellule (106) a besoin pour satisfaire des critères de qualité prédéterminés de connexions existantes de la deuxième cellule (106).

8. Un procédé, comprenant :
la détermination (200) de la quantité de ressources dont une station de base (100) desservant une première cellule (104) a besoin pour satisfaire des critères de qualité prédéterminés de connexions existantes, la détermination comprenant la détermination de la quantité minimale de blocs de ressource physiques nécessaire pour satisfaire des exigences de qualité de service de connexions existantes au moyen de différents types de porteuse, et
la transmission (202) d'une information déterminée vers une station de base (102) desservant une deuxième cellule (106), l'information déterminée comprenant la quantité minimale de blocs de ressource physiques nécessaire pour satisfaire des exigences de qualité de service de connexions existantes au moyen de différents types de porteuse.

9. Le procédé selon la revendication 8, comprenant en outre : la détermination séparée des ressources pour des directions de transmission en liaison montante et en liaison descendante.

10. Le procédé selon l'une quelconque des revendications précédentes 8 à 9, comprenant en outre : la détermination de la quantité totale minimale de blocs de ressource physiques nécessaire pour satisfaire des exigences de qualité de service de connexions de trafic et de transmissions de messages système.

11. Le procédé selon l'une quelconque des revendications précédentes 8 à 10, comprenant en outre : la transmission de l'information déterminée au moyen d'une interface X2 qui relie des stations de base (100, 102).

12. Le procédé selon l'une quelconque des revendications précédentes 8 à 11, comprenant en outre : la détermination de la quantité de ressources requise par des porteuses à débit binaire garanti et des porteuses à débit binaire non garanti.

13. Le procédé selon l'une quelconque des revendications précédentes 8 à 12, comprenant en outre : la libération de ressources de coordination vers la station de base (102) desservant la deuxième cellule (106) si la quantité déterminée de ressources nécessaire pour satisfaire des critères de qualité prédéterminés de connexions existantes est inférieure à des ressources disponibles et la station de base (102) desservant la deuxième cellule (106) ne peut pas satisfaire les critères de qualité prédéterminés de connexions existantes de la deuxième cellule (106).

14. Le procédé selon la revendication 13, comprenant la réception à partir de la station de base (102) desservant la deuxième cellule (106) d'informations relatives à la quantité de ressources dont la station de base desservant (102) la deuxième cellule (106) a besoin pour satisfaire des critères de qualité prédéterminés de connexions existantes de la deuxième cellule (106).

15. Un produit de programme informatique incorporé sur un support de distribution lisible par un ordinateur et contenant des instructions de programme qui, lorsqu'elles sont chargées dans un appareil, exécutent le procédé selon l'une quelconque des revendications 8 à 14.
